# EUROPÄISCHE PATENTSCHRIFT

(11) **EP 1 041 397 B1**
(45) Veröffentlichungstag und Bekanntmachung des Hinweises auf die Patenterteilung: **21.03.2007**
(21) Anmeldenummer: 00105464.2
(22) Anmeldetag: 15.03.2000
(51) Int. Cl.: G01S 11/08

(54) **Verfahren und Vorrichtung zum Bestimmen eines Auftrittszeitpunkts eines codierten Signals**
Method and apparatus to determine the arrival time of a coded signal
Procédé et dispositif pour déterminer l'instant d'arrivée d'un signal codé

(30) Priorität: 23.03.1999 DE 19913075
(43) Veröffentlichungstag der Anmeldung: 04.10.2000
(73) Patentinhaber: Fraunhofer-Gesellschaft zur Förderung der angewandten Forschung e.V., 80686 München (DE)
(72) Erfinder: Heuberger, Albert, Dipl.-Ing., 91056 Erlangen (DE); Eberlein, Ernst, Dipl.-Ing., 91091 Grossenseebach (DE); Buchta, Rainer, Dipl.-Ing., 91074 Herzogenaurach (DE); Gerhäuser, Heinz, Dr.-Ing., 91344 Waischenfeld (DE)
(74) Vertreter: Schoppe, Fritz

(56) Entgegenhaltungen:
- CA-A- 2 213 979
- US-A- 5 361 398
- US-A- 5 867 489

## Beschreibung

Die vorliegende Erfindung bezieht sich auf das Bestimmen des auf eine Zeitbasis bezogenen Auftrittszeitpunkts eines Informationsworts in einem codierten Signal und insbesondere auf die Messung der Laufzeit eines Signals von einer Bodenstation zu einem Satelliten und wieder zurück zu einer Bodenstation, um eine Satelliten auf passive Art und Weise zu orten.

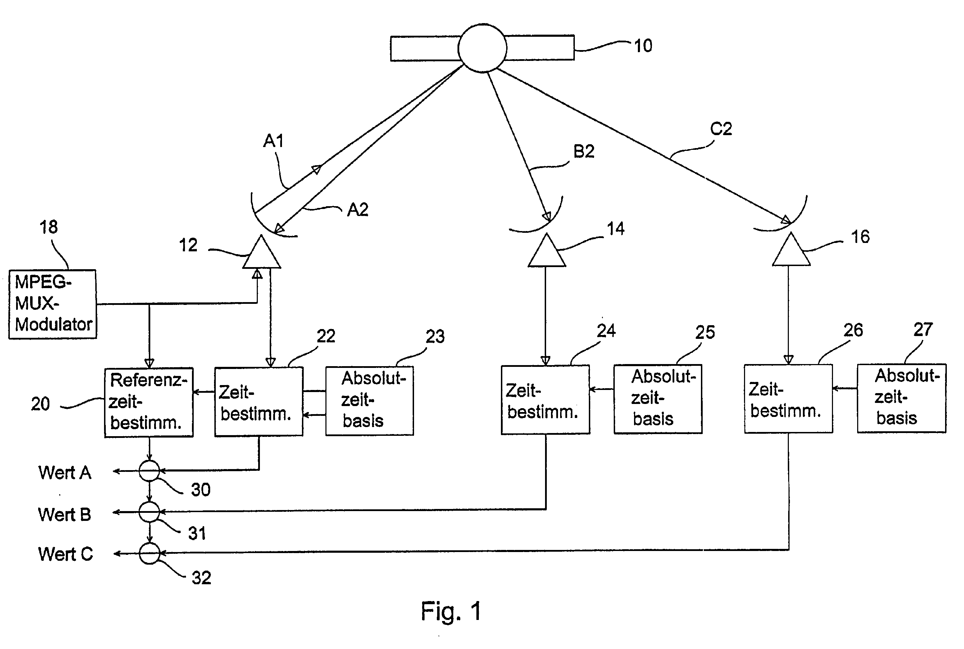

Fig. 1 zeigt ein System zum Messen der Position eines Satelliten 10 mittels dreier Bodenstationen 12, 14, 16. Das Signal, das über die Bodenstation 12 ausgesendet wird, stammt von einem MPEG-MUX-Modulator 18. Das Signal ist hier ein digitales Audiosignal oder ein digitales Videosignal, oder ein Multiplex bestehend aus mehreren solchen Signalen das nach einem MPEG-Standard codiert ist, wie es beispielsweise für DVB (Digital Video Broadcasting = digitaler Videorundfunk) oder für DAB (DAB = Digital Audio Broadcasting = digitaler Audiorundfunk) verwendet wird. Die Bodenstation 12 sendet das von dem MPEG-MUX-Modulator 18 erzeugte Signal zu dem Satelliten 10, der dasselbe einerseits wieder zurück zu der Bodenstation 12 und andererseits zu den Bodenstationen 14 und 16 sendet.

Zur dreidimensionalen Ortsbestimmung des Satelliten 10 sind mindestens drei Ortsmeßpunkte sowie eine Referenzmessung für das von der Bodenstation 12 zu dem Satelliten 10 gesendete Signal, das auch als Uplink-Signal (Uplink = "Verbindung nach oben") bezeichnet wird, nötig. Das Uplink-Signal wird zur Referenzmessung nach dem MPEG-MUX-Modulator 18 zu einer Referenzzeitbestimmungseinrichtung 20 zurückgeführt. Dadurch werden ein Jitter, der durch den Modulator entsteht, sowie systematische Fehler kompensiert, da die gleiche Art der Messung für alle vier Zeitbestimmungseinrichtungen, d. h. die Referenzzeitbestimmungseinrichtung 20, eine Zeitbestimmungseinrichtung 22, eine Zeitbestimmungseinrichtung 24 und eine Zeitbestimmungseinrichtung 26, verwendet wird. Das in Fig. 1 gezeigte System gliedert sich somit in die drei Bodenstationen 12, 14, 16, wobei den Bodenstationen 14 und 16 jeweils die Zeitbestimmungseinrichtung 24 bzw. 26 sowie vorzugsweise eine Absolutzeitbasis 25 bzw. 27 zugeordnet sind. Der Bodenstation 12, die als Sender und Empfänger fungiert, sind neben dem MPEG-MUX-Modulator 18 die Referenzzeitbestimmungseinrichtung 20, die Zeitbestimmungseinrichtung 22 und ebenfalls vorzugsweise eine Absolutzeitbasis 23 zugeordnet. Das System umfaßt ferner drei Subtrahierer 30, 31, 32, wobei der Subtrahierer 30 einen Wert A ausgibt, während der Subtrahierer 31 einen Wert B ausgibt, und der Subtrahierer 32 einen Wert C ausgibt. Ein Eingang jedes Substrahierers wird durch die Referenzzeitbestimmungseinrichtung 20 gespeist, während der andere Ausgang eines Subtrahierers 30 bis 32 von der zeitbestimmungseinrichtung 22, der Zeitbestimmungseinrichtung 24 bzw. der Zeitbestimmungseinrichtung 26 gespeist wird, wie es aus Fig. 1 ersichtlich ist.

Der Wert A entspricht somit der Laufzeit eines Signals von der Bodenstation 12 zu dem Satelliten 10 (Weg A1) und von dem Satelliten 10 wieder zu der Bodenstation 12 zurück (Weg A2). Die Laufzeit dieses Signals über den Weg A1 und den Weg A2 wird auch als Roundtrip-Laufzeit bezeichnet. Wichtig ist, daß die Laufzeit direkt von der Antenne der Bodenstation 12 zum Satelliten und von dort wieder zurück zu der Antenne 12 gemessen wird, und nicht von einem Eingang des MPEG-MUX-Modulators 18 aus, damit die tatsächliche Entfernung des Satelliten 10 von der Bodenstation 12 bestimmt werden kann, da der MPEG-MUX-Modulator eine variable Zeitverzögerung usw. haben kann. Aus diesem Grund wird die Referenzzeitbestimmungseinrichtung 20 eingesetzt, die den Zeitpunkt bezüglich der Zeitbasis 23 bestimmt, zu dem das Signal den MPEG-MUX-Modulator verläßt, während die Zeitbestimmungseinrichtung 22 den Zeitpunkt bezüglich der Zeitbasis 23 bestimmt, zu dem das Signal wieder an der Bodenstation 12 ankommt. Die Differenz dieser beiden Werte, d. h. der Wert A, entspricht somit der Roundtrip-Laufzeit zwischen der Bodenstation 12 und dem Satelliten 10.

Auf ähnliche Art und Weise entspricht der Wert B der Laufzeit eines Signals über den Weg A1 von der Bodenstation 12 zu dem Satelliten und der Laufzeit des Signals von dem Satelliten 10 zu der Bodenstation 14 (Weg B2). Analog entspricht der Wert C der Laufzeit eines Signals von der Bodenstation 12 zu dem Satelliten 10 und wieder zurück von dem Satelliten 10 zu der Bodenstation 16 (Weg C2). Dadurch, daß an den Subtrahierern 31, 32 der durch die Referenzzeitbestimmungseinrichtung 20 bestimmte Zeitpunkt bezüglich der Zeitbasis 23 von dem Wert subtrahiert wird, den die zeitbestimmungseinrichtung 24 liefert, der auf die Zeitbasis 25 bezogen ist, entspricht der Wert B genau der Laufzeit über den Weg A1 und den Weg B2. Analoges gilt für den Wert C. Damit alle Zeitpunkte, die von den Zeitbestimmungseinrichtungen 20, 22, 24, 26 ausgegeben werden, gleiche Bezugswerte haben, müssen die Zeitbasen 23, 25, 27 aufeinander synchronisiert werden, was auf einfache Art und Weise dadurch erreicht werden kann, daß die drei Zeitbasen 23, 25, 27 Absolutzeitbasen, d. h. Uhren sind, die beispielsweise als Funkuhren ausgeführt sein können und somit zentral synchronisiert sind.

Wesentlich bei der Durchführung einer Positionsbestimmung des Satelliten 10 mittels des in Fig. 1 gezeigten Systems ist das Signal, das die einzelnen Zeitbestimmungseinrichtungen 20, 22, 24, 26 verwenden, um bestimmte Zeitpunkte relativ zu einer Zeitbasis messen zu können. So könnte eine Korrelation von Signalen verwendet werden, die eine spezielle Modulation aufweisen, welche vorzugsweise eine Phasenmodulation mit einem bekannten Modulationsbitmuster sein kann. Eine Messung der Laufzeit wird durch Korrelation des empfangenen Signals mit einer Kopie desselben durchgeführt. Dieses Verfahren wird auch als Autokorrelation bezeichnet. Es ergibt als Korrelationsspitze den Zeitpunkt der Ankunft, der auch als TOA (TOA = Time Of Arrival) bezeichnet wird. Dieses Signal wird parallel zu dem Nutzsignal übertragen, das Programmdaten, wie z. B. Videodaten oder Audiodaten, umfaßt.

Moderne digitale Satellitensysteme, welche beispielsweise für das digitale Satellitenfernsehen eingesetzt werden, verwenden ein paketorientiertes Übertragungsprotokoll, um die Programminformationen oder Programmdaten zu übertragen. Die Programmdaten werden auch als Nutzdaten oder Payload-Daten bezeichnet. Statt des parallelen Übertragens eines speziellen Ortsbestimmungssignals könnte auch ein kleiner Anteil der Nutzdaten verwendet werden, um bekannte Sequenzen zwecks einer Ortsbestimmung eines Satelliten zu übertragen. Dieser kleine Anteil der Nutzdaten, der auch als Zeitmarke oder Informationswort bezeichnet wird, wird ebenfalls wie das Nutzsignal der Codierung durch den MPEG-MUX-Modulator 18 unterworfen. Bei modernen digitalen Übertragungssystemen wird eine Vorwärtsfehlerkorrektur eingesetzt, die auf einer Energieverteilung über bestimmte Frequenzbänder oder Zeitschlitze, einer Verschachtelung und/oder einer Faltungscodierung aufbaut. Die Vorwärtsfehlerkorrektur wird auch als Kanalcodierung bezeichnet, die beispielsweise als Viterbi-Codierung oder als Reed-Solomon-Codierung implementiert sein kann, welche Fachleuten bekannt sind.

Prizipiell wäre die Erfassung des Informationsworts, d. h. der zeitmarke, auf Bitstromebene nach dem MPEG-Decodierer in der Bodenstation 14 oder 16 möglich. Bei üblichen Systemen wird hier die Zeitauflösung jedoch zu gering sein. Außerdem können nicht-deterministische Signalverzögerungen in dem Decodierverfahren auftreten.

Für das in Fig. 1 gezeigte System wird eine Positionsgenauigkeit für den Satelliten 10 von 15 m benötigt. Unter der Annahme, daß die Empfangsorte 12, 14, 16 etwa 2000 km voneinander entfernt liegen, ergibt sich eine Genauigkeitsanforderung für die zeitbestimmung von etwa 5 ns. Dieser Wert ist wesentlich kürzer als die Symboldauer der QPSK-modulierten Nutzsignale, die bei einer Transponder-Bandbreite (3 dB-Bandbreite) von 26 MHz etwa 50 ns beträgt. Eine Detektion auf Bitstream-Ebene, d. h. nach dem Decodierer in den Bodenstationen 12, 14, 16, ist daher unzureichend. Außerdem liefert der MPEG-Standard nur eine Zeitauflösung von 1/27 MHz (37 ns) für die Informationswörter bzw. Zeitmarken zur zeitpunktbestimmung. Zusätzliche Probleme ergeben sich durch den Jitter, der durch die Schnittstellen, Modulatoren und Demodulatoren verursacht wird. Es würde daher, um eine ausreichende Sicherheit zu haben, eine Zeitauflösung für die Korrelation mit einer Integrationszeit von 1 Sekunde von etwa 3 ns benötigt. Damit ist jedoch eine Korrelation auf MPEG-Bitstromebene aufgrund der etwa 10 mal höheren Symbolzeit definitiv ausgeschlossen.

Eine Möglichkeit, um eine höhere Zeitauflösung zu erhalten, würde darin bestehen, die Korrelation nicht auf Bitstromebene, sondern auf QPSK-Ebene durchzuführen. Diese Möglichkeit erfordert jedoch eine Signalverarbeitung mit sehr hoher Abtastfrequenz, die zu hoch ist, um in der Praxis in Echtzeit zufriedenstellend arbeiten zu können.

Ein weiterer Nachteil besteht darin, daß, um eine ausreichende Genauigkeit zu erhalten, das Ortungssignal eine hohe Bandbreite haben muß, derart, daß die Pulse ausreichend definiert und natürlich ausreichend kurz sind. Ferner benötigt eine Übertragung des Ortungssignals elektrische Leistung im Satelliten 10, was zu zusätzlichen Kosten führt, und zudem eine Funkfrequenzbandbreite erforderlich macht, die einerseits zur Verfügung gestellt werden müßte, und die andererseits in internationalen Gremien, wie z. B. der ITU, koordiniert werden müßte, was zum einen langwierig und zum anderen arbeitsintensiv und teuer ist.

Die Aufgabe der vorliegenden Erfindung besteht darin, eine genaue Bestimmung des Auftrittszeitpunkts eines vorbestimmten Informationsworts in einem codierten Signal und eine genaue Bestimmung der Laufzeit eines Signals von einem Sender zu einem Empfänger zu schaffen, ohne daß zusätzliche Signalbandbreite benötigt wird, um die Voraussetzungen zur Ortsbestimmung eines Satellits zu schaffen.

Diese Aufgabe wird durch ein Verfahren nach Anspruch 1 oder 16 und durch eine Vorrichtung nach Anspruch 21 oder 23 gelöst.

Der vorliegenden Erfindung liegt die Erkenntnis zugrunde, daß zur Bestimmung des auf eine Zeitbasis bezogenen Auftrittszeitpunkts, zu dem ein vorbestimmtes Informationswort in einem codierten Signal auftritt, ein zweistufiges Konzept einzusetzen ist, derart, daß einerseits ein Schätzauftrittszeitpunkt auf Bitstromebene nach dem Decodierer ermittelt wird, und daß andererseits ein Korrekturwert auf analoger Ebene, d. h. vor dem Decodierer, bestimmt werden muß, derart, daß einerseits der Vorteil der einfachen Bearbeitung auf Bitstromebene und andererseits der Vorteil der hohen Auflösung, die dem codierten Signal zugeordnet ist, miteinander kombiniert werden können, um ein System zu erhalten, das trotz beliebiger Kanalcodierung, die selbstverständlich auch das vorbestimmte Informationswort, das Teil des Nutzsignals ist, abhängig von den an sich unbekannten benachbarten Nutzdaten auf irgendeine Art und Weise codiert, betrifft, genau, zuverlässig und mit begrenztem Aufwand arbeitet.

Hierzu wird zunächst das codierte Signal, das analog vorliegt, abgetastet, wonach die Abtastwerte in Zuordnung zu einer Zeitbasis gespeichert werden. Das codierte Signal wird ferner decodiert, um eine decodierte Version des Signals zu erhalten, die das codierte/decodierte Informationswort aufweist. Die Position des Informationsworts in dem Signal ist jedoch nicht bekannt und wird durch Vergleichen der decodierten Version des Signals mit dem bekannten Informationswort bei einem bevorzugten Ausführungsbeispiel auf Bitstromebene bestimmt. Bei Auftreten des codierten/decodierten Informationsworts in der decodierten Version des Signals wird der Zeitpunkt des Auftretens bezüglich der Zeitbasis markiert, um einen Schätzauftrittszeitpunkt zu erhalten. Damit ist die erste Stufe des Konzepts erreicht.

Da die Zeitauflösung der decodierten Version des Signals zu gering ist, wird als zweite Stufe zusätzlich eine Korrelation der gespeicherten Abtastwerte des codierten Signals und mit einem Referenzsignal, das das codierte Informationswort aufweist, durchgeführt, wobei bei Auftreten eines Korrelationsmaximums die Differenz zwischen dem markierten Zeitpunkt und dem Zeitpunkt des Auftretens des Korrelationsmaximums bestimmt wird, um einen Korrekturwert zu erhalten. Durch Kombination des Schätzauftrittszeitpunkts und des Korrekturwerts wird ein Auftrittszeitpunkt ermittelt, der auf beliebige Art und Weise auf eine Zeitbasis bezogen werden kann, um denselben mit anderen Zeitpunkten in Beziehung setzen zu können. Wird eine Differenzmessung durchgeführt, wie bei dem in Fig. 1 gezeigten Beispiel, so könnte, wenn es praktisch machbar ist, ein erster Auftrittszeitpunkt einen Zähler starten, der so lange hochzählt, bis ein zweiter Auftrittszeitpunkt vorkommt. In diesem Falle wird keine absolute Zeitbasis benötigt, sondern lediglich eine relative Zeitbasis, die in der Taktfrequenz des Zählers besteht, derart, daß unabhängig von einer absoluten Zeit eine relative Zeitdauer bestimmt werden kann, die beispielsweise der Roundtrip-Laufzeit eines Signals von einer Bodenstation zu einem Satelliten und wieder zurück zu einer Bodenstation entsprechen kann.

Die vorliegende Erfindung liefert eine Vielzahl von Vorteilen. So ist eine genaue Bestimmung des Auftrittszeitpunkts eines Informationswortes möglich, das jedoch im Gegensatz zu der Möglichkeit des Übertragens eines getrennten Positionsbestimmungssignals, Teil des Nutzsignals ist und somit lediglich die gleiche Bandbreite wie das Nutzsignal benötigt, das die Nutzdaten trägt. Es wird somit keine große Bandbreite bzw. keine zusätzliche Bandbreite benötigt, die zu genehmigen wäre. Weiterhin wird keine zusätzliche Sendeleistung an Bord des Satelliten in Anspruch genommen. Da die Informationsworte vorzugsweise kurze Sequenzen sind, fällt die Sendeleistung, die der Satellit benötigt, im Vergleich zu den eigentlichen Nutzdaten links und rechts neben dem Informationswort überhaupt nicht ins Gewicht. Da keine Eintastung in ein moduliertes Signal durchgeführt werden muß, da die Eintastung der Zeitmarken oder vorbestimmten Informationswörter bereits vor dem Codierer stattfindet, ist der dazu erforderliche Schaltungsaufwand außerordentlich gering. Außerdem "kalibriert" das erfindungsgemäße Verfahren automatisch alle, auch nicht-deterministische Verzögerungen von Codierer und Decodierer heraus, da die Verwendung des codierten Signals, d. h. des analogen Signals vor dem Decodierer, zur Ermittlung des Korrekturwerts noch keine Codiererverzögerungen erfahren hat. Das codierte Signal ist durch sehr schnelle konstant arbeitende Hochfrequenzbauteile, wie z. B. Mischer, usw. gleichmäßig und schnell verarbeitet worden ist, derart, daß die Laufzeiten bis zur Transformation des empfangen HF-Signals in das Basisband entweder keine Rolle spielen oder aufgrund ihres linearen und konstanten Wesens ohne weiteres herausgerechnet werden können.

Ein weiterer wesentlicher Vorteil der vorliegenden Erfindung besteht darin, daß eine "Off-Line"-Verarbeitung durchgeführt werden kann, derart, daß die Korrelation des hochabgetasteten Signals von der Abtastfrequenz, die zum Abtasten des analogen Basisbandsignals verwendet wird, gewissermaßen entkoppelt ist, da die Abtastwerte zwischengespeichert werden. Damit muß ein digitaler Signalprozessor, der die Korrelation der abgetasteten analogen Basisbandsignale mit einer Referenzsequenz durchführt, bei seiner Bearbeitungsgeschwindigkeit nicht auf irgendwelche anderen Bauteile Rücksicht nehmen. Derselbe kann beliebig langsam arbeiten und damit durch einen beliebig preisgünstigen Baustein realisiert werden. Das einzige Element, das relativ schnell arbeiten muß, ist der A/D-Wandler zum Abtasten des analogen Basisbandsignals. Es existiert jedoch eine Vielzahl von schnellen A/D-Wandler-Speicher-Kombinationen, die um den Bereich von 30 MHz arbeiten. Bei praktischen Ausführungsbeispielen genügen Abtastfrequenzen im Bereich von 30 MHz ohne weiteres, was ebenfalls den Zugriff auf übliche und nicht zu teuere Bausteine ermöglicht. Die Bausteine auf Bitstromebene, wie z. B. ein Bitkomparator, können sehr preisgünstig realisiert werden, da sie nicht schnell arbeiten müssen.

Ein wesentlicher Vorteil der durch die vorliegende Erfindung ermöglichten, jedoch nicht obligatorischen, Off-Line-Verarbeitung besteht in der von Echtzeichtanforderung getrennten Erzeugung des Referenzsignals, das dem digitalen Signalprozessor zugeführt wird. Da bei einem bevorzugten Ausführungsbeispiel das codierte Signal im Basisband ein komplexes Signal mit einer In-Phase-Komponente und einer Quadratur-Komponente ist, in dem das vorbestimmte Informationswort codiert ist, wobei die Codierung des Informationsworts jedoch aufgrund moderner Codierverfahren sehr stark von den Nachbardaten zeitlich vor bzw. nach dem Informationswort oder auch von Daten in irgendeinem anderen Kanal, wenn an eine Mehrträgermodulation gedacht wird, abhängt, kann die Erzeugung des Referenzsignals unter Umständen relativ aufwendig sein. Das Referenzsignal kann jedoch ohne weiteres erzeugt werden, da am Ausgang des Decodierers die decodierten Bitstromdaten vorliegen, aus denen, ebenso wie bei dem im Sender angeordneten Codierer wieder komplexe I/Q-Basisbandsignale im Empfänger erzeugt werden können. Da die Verarbeitung im digitalen Signalprozessor durch die Speicherung der empfangenen komplexen Basisbandsignale von der Abtastfrequenz zum Abtasten derselben entkoppelt ist, steht der erfindungsgemäßen Zeitbestimmungseinrichtung nahezu beliebig viel Zeit zur Verfügung, derart, daß auch relativ langsame und damit preisgünstige Bausteine zur Erzeugung des Referenzsignals eingesetzt werden können. Liegen jedoch ausreichend schnelle Prozessoren und Bausteine vor, so kann das erfindungsgemäße Konzept selbstverständlich auch in Echtzeit ausgeführt werden.

Bevorzugte Ausführungsbeispiele der vorliegenden Erfindung werden nachfolgend bezugnehmend auf die beiliegenden Zeichnungen detailliert erläutert. Es zeigen:
- Fig. 1: ein System zum Bestimmen der Position eines Satelliten, auf das das erfindungsgemäße Konzept angewendet werden kann;
- Fig. 2: ein Prinzipblockschaltbild für eine Zeitbestimmungseinrichtung von Fig. 1;
- Fig. 3: ein Blockschaltbild einer zeitbestimmungseinrichtung gemäß einem bevorzugten Ausführungsbeispiel der vorliegenden Erfindung; und
- Fig. 4: ein Blockschaltbild eines Systems mit einer Referenzzeitbestimmungseinrichtung und einer Zeitbestimmungseinrichtung von Fig. 1, um den Wert A, B oder C, d. h. eine Laufzeit eines Signals von einem ersten Ort zu einem zweiten Ort, zu messen.

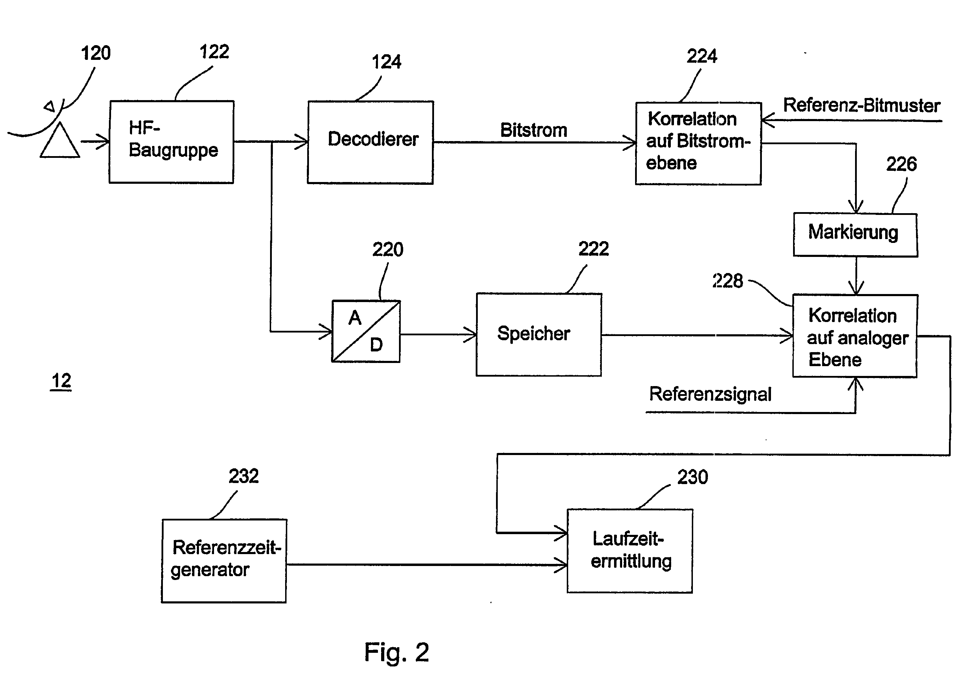

Fig. 2 zeigt ein Prinzipblockschaltbild einer erfindungsgemäßen Vorrichtung, mittels derer das erfindungsgemäße Verfahren ausgeführt werden kann. Sämtliche in Fig. 2 dargestellten Komponenten sind in einer Bodenstation, wie z. B. der Bodenstation 12, enthalten. Die Bodenstation 12 umfaßt neben einer Empfangsantenne 120 eine übliche Hochfrequenz-Baugruppe 122, die das von der Empfangsantenne 120 empfangene Hochfrequenzsignal vorzugsweise auf ein Basisbandsignal umsetzt, das durch einen Decodierer 124 decodiert wird, um bei einem bevorzugten Ausführungsbeispiel der Erfindung einen Bitstrom zu erhalten. Die Elemente 120, 122, 124 stellen keinen Teil der vorliegenden Erfindung dar und sind in jeder Bodenstation erforderlich.

Die anderen Funktionseinheiten, die in Fig. 2 dargestellt sind, sind Teil der Zeitbestimmungseinrichtung 20, 22, 24 oder 26. Die nachfolgende Beschreibung wird anhand der Zeitbestimmungseinrichtung 22 durchgeführt. Dieselbe umfaßt zunächst einen Analog/Digital-Wandler 220, der das Eingangssignal in den Decodierer 124 abtastet und von einer analogen Form in eine digitale Form umwandelt, um das abgetastete digitalisierte codierte Signal in einem Speicher 222 zu speichern. Der von dem Decodierer 124 ausgegebene Bitstrom wird in eine Einrichtung 224 zur Durchführung einer Korrelation auf Bitstromebene eingespeist, in die gleichzeitig ein Referenz-Bitmuster, das das vorbestimmte Informationswort vor der Codierung darstellt, eingespeist wird. Die Einrichtung 224 ist vorzugsweise als einfacher Bitkomparator implementiert.

Wird eine Übereinstimmung eines Teils des Bitstroms mit dem Referenz-Bitmuster festgestellt, kann davon ausgegangen werden, daß zu diesem Zeitpunkt das vorbestimmte Informationswort in dem decodierten Bitstrom auftritt. Dieses Ereignis führt dazu, daß die Einrichtung 224 ein Signal zu einer Markierungseinrichtung 226 übermittelt, die einerseits eine Markierung bezüglich einer Zeitbasis (nicht dargestellt) durchführt, um bereits einen Schätzauftrittszeitpunkt des Informationsworts in dem codierten Signal zu erhalten. Andererseits aktiviert ein Ausgangssignal der Markierungseinrichtung 226 einen Korrelator 228 zur Durchführung einer Korrelation eines Referenzsignals mit dem abgetasteten digitalisierten und gespeicherten codierten Basisbandsignal.

Liefert der Korrelator 228 ein Korrelationsmaximum, so gibt derselbe ein Signal zu einer Einrichtung 230 zur Ermittlung der Laufzeit, wobei die Einrichtung 230 zur Ermittlung der Laufzeit ferner mit einem Referenzzeitgenerator 232 verbunden ist, der entweder die Absolutzeitbasis 23 sein kann, wenn eine Absolutzeitmessung durchgeführt werden soll, oder der die Referenzzeitbestimmungseinrichtung 20 sein kann, wenn eine Differenzzeitmessung durchgeführt wird. Es sei darauf hingewiesen, daß die Referenzzeitbestimmungseinrichtung 20 den gleichen Aufbau wie die Zeitbestimmungseinrichtung 22 haben kann. Eine Zeitbasis, bezüglich der die Markierungseinrichtung 226 das Auftreten des vorbestimmten Informationswort im Bitstrom zeitlich markiert, und bezüglich der der Korrelator 228 eine Korrelation in zeitlicher Rückwärtsrichtung mit den im Speicher 222 abgespeicherten Werten durchführt, um den Korrekturwert zu ermitteln, ist in Fig. 2 nicht dargestellt.

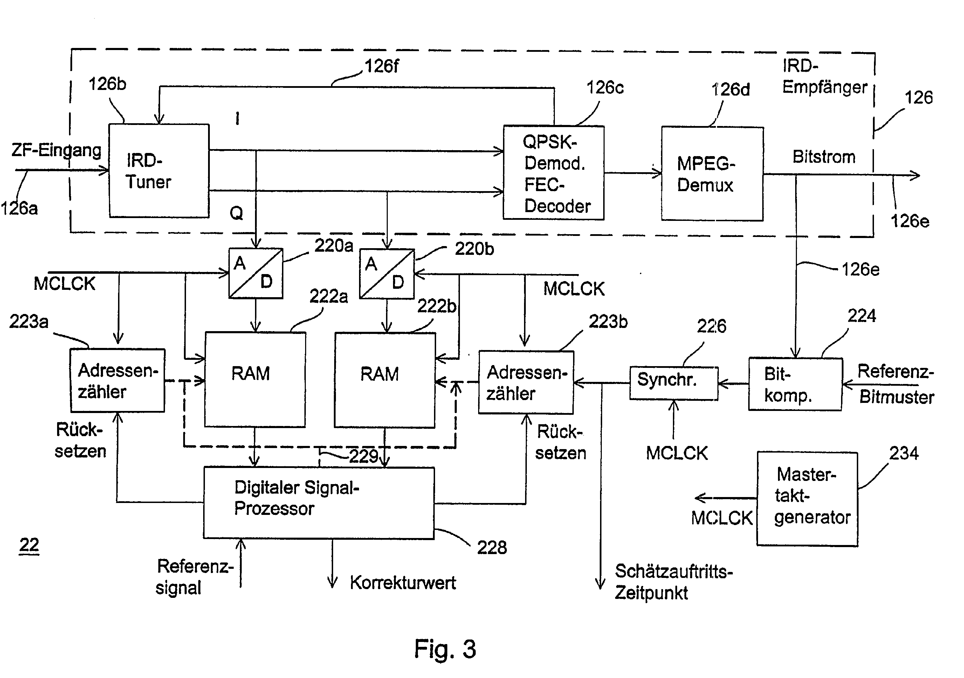

Fig. 3 zeigt ein etwas modifiziertes und zugleich detaillierteres Blockschaltbild der erfindungsgemäßen Zeitbestimmungseinrichtung 22, die mit einem IRD-Empfänger 126 gekoppelt ist. Der IRD-Empfänger 126 (IRD = Integrated Receiver Decoder) ist üblicherweise als kommerzielles Bauteil verfügbar und weist einen ZF-Eingang 126a, einen IRD-Tuner 126b, eine Einrichtung 126c, die aus einem QPSK-Demodulator und einem FEC-Decoder besteht (QPSK = Quaternary Phase Shift Keying = quaternäre Phasenumtastung; FEC = Forward Error Correccion = Vorwärtsfehlerkorrektur), einen MPEG-Demultiplexer 126d und einen Bitstromausgang 126e auf.

Bei der digitalen Übertragung kann eine Quaternär-Phasenumtastung verbunden mit einer Vorwärtsfehlerkorrektur verwendet werden. Das entsprechende codierte/modulierte Signal wird im Sender auf eine HF-Trägerfrequenz hochgemischt und übertragen, um in dem Empfänger schließlich wieder auf eine Zwischenfrequenz heruntergemischt zu werden. Das derart behandelte Zwischenfrequenzsignal wird dem ZF-Eingang des IRD-Empfängers 126 zugeführt. Es gelangt in den IRD-Tuner, der einerseits das ZF-Signal auf das Basisband umsetzt, und der andererseits ausgangsseitig die In-Phase-Komponente (I) und die Quadratur-Komponente (Q) liefert, die zusammen das codierte Signal bilden, in dem einerseits Nutzdaten codiert sind, und in dem andererseits auch Zeitmarken, d. h. vorbestimmte Informationswörter, codiert sind, um die erfindungsgemäße Positionsbestimmung durchführen zu können. Die I/Q-Teilsignale werden in die Einrichtung 126c eingespeist, um zunächst die QPSK-Modulation rückgängig zu machen. Die Einrichtung 126c ist über einen Rückkopplungszweig 126f mit dem IRD-Tuner rückkopplungsmäßig verbunden, um sicherzustellen, daß der IRD-Tuner immer eine Umsetzung des Zwischenfrequenzsignals in das Basisband, d. h. auf eine Trägerfrequenz gleich Null, durchführt.

Die I-Komponente und die Q-Komponente des codierten Signals können anhand eines komplexen Zeigerdiagramms veranschaulicht werden. Sie bilden zusammen den komplexen Zeiger, der in der komplexen Ebene je nach modulierter Phase über einen Quadranten, über zwei Quadranten oder über drei Quadranten bewegt wird. Wäre der Rückkopplungszweig 126f nicht vorhanden, so könnte leicht der Fall auftreten, daß der IRD-Tuner keine vollständige Umsetzung des ZF-Signals auf die Frequenz Null erreicht. In diesem Fall würde der komplexe Zeiger zusätzlich zu der gerade beschriebenen Bewegung mit der "Basisbandfrequenz" in der komplexen Ebene rotieren. Selbstverständlich könnte diese Rotation auch durch die erfindungsgemäße Einrichtung im Sinne der Referenzsignalerzeugung berücksichtigt werden. Dies würde jedoch zu einem zusätzlichen Aufwand zum Erzeugen des Referenzsignals führen.

Das Ausgangssignal der Einrichtung 126 wird schließlich in den MPEG-Demultiplexer 126d eingespeist, der an sich bekannt ist, um den decodierten Bitstrom am Ausgang 126e zu erhalten. Der decodierte Bitstrom wird in den Bitkomparator 224 eingespeist, der zusätzlich das Referenz-Bitmuster, d. h. das uncodierte vorbestimmte Informationswort, erhält. Wird eine Übereinstimmung festgestellt, so liefert der Bitkomparator 224 ein Ausgangssignal zu einer Synchronisationseinrichtung, die in Fig. 2 als Markierungseinrichtung 226 bezeichnet wurde.

Die Synchronisationseinrichtung 226 synchronisiert den Zeitpunkt der Übereinstimmung, der durch den Bitkomparator 224 festgestellt wurde, auf einen Mastertakt (MCLK), der von einem Mastertaktgenerator 234 erzeugt wird, wobei der Mastertaktgenerator 224 als Zeitbasis fungieren kann. Die Synchronisationseinrichtung 226 liefert somit, wenn sie von dem Bitkomparator 224 angesprochen worden ist, beispielsweise bei der nächsten ansteigenden Taktflanke des Mastertakts ein Signal, das den Schätzauftrittszeitpunkt darstellt. Der Mastertaktgenerator 234 liefert ferner den Takt für die Analog/Digital-Wandler 220a, 220b, deren Ausgangssignale in einen RAM-Speicher 222a bzw. 222b eingespeichert werden. Der A/D-Wandler 220a führt eine Abtastung der In-Phase-Komponente des codierten Signals am Ausgang des IRD-Tuners 126b durch, während der Analog/Digital-Wandler 220b eine Abtastung der Quadratur-Komponente des codierten Signals am Ausgang des IRD-Tuners 126b durchführt.

Wie es aus Fig. 3 zu sehen ist, sind sowohl dem RAM-Speicher 222a als auch dem RAM-Speicher 222b ein Adressenzähler 223a bzw. 223b zugeordnet. Beide RAM-Speicher sind mit dem Korrelator 228, der vorzugsweise als digitaler Signalprozessor ausgeführt ist, verbunden, derart, daß der digitale Signalprozessor abhängig von erzeugten Adressensignalen über eine Adressenleitung 229 die Adressenzähler 223a und 223b und damit die RAM-Speicher 222a und 222b ansprechen kann, derart, daß sie den bei der entsprechenden Adresse gespeicherten Wert dem digitalen Signalprozessor 228 zuführen. Der digitale Signalprozessor 228 umfaßt ferner zwei Ausgänge, um beide Adressenzähler 223a, 223b rücksetzen zu können. Außerdem erhält der digitale Signalprozessor 228 das Referenzsignal für die Korrelation und liefert den Korrekturwert an seinem Ausgang.

Die beiden RAM-Speicher 222a und 222b sind vorzugsweise als FIFO-Speicher organisiert, die in chronologischer Reihenfolge von den A/D-Wandlern 220a bzw. 220b gespeist werden. In den RAM-Speichern 222a und 222b entsteht somit nach und nach eine abgetastete und digitalisierte Darstellung der In-Phase-Komponente bzw. der Quadratur-Komponente des codierten Signals.

Stellt der Bitkomparator 224 eine Übereinstimmung eines Teils des Bitstroms am Ausgang 126e des IRD-Empfängers mit dem Referenz-Bitmuster fest, so aktiviert derselbe die Synchronisationseinrichtung 226, derart, daß dieselbe die gerade aktuelle Adresse in dem Adressenzähler 223b und in dem Adressenzähler 223a markiert. Da sowohl die Synchronisationseinrichtung 226 als auch die A/D-Wandler, die Adressenzähler und die Speicher auf den Mastertakt des Mastertaktgenerators 234 bezogen sind, der als Zeitbasis fungiert, stellt die adressierte Adresse einen definierten Zeitpunkt dar, auf den bei der nachfolgenden Korrelation durch den digitalen Signalprozessor 228 in ganzzahligen Vielfachen der Mastertaktperiodendauer Bezug genommen werden kann. Bei dem in Fig. 3 gezeigten bevorzugten Ausführungsbeispiel der vorliegenden Erfindung wird eine Off-Line-Bearbeitung durchgeführt. Da die Synchronisationseinrichtung 226 das Auftreten des Informationsworts im decodierten Bitstrom markiert, ist es a priori bekannt, daß das Informationswort im codierten Signal zeitlich vorher aufgetreten sein muß, da die Einrichtung 126c eine bestimmte Verzögerung aufweist, die nicht von vorneherein bekannt bzw. konstant ist. Der digitale Signalprozessor erhält somit das Referenzsignal, das anhand des decodierten Bitstroms am Ausgang 126e des IRD-Empfängers erzeugt werden kann, und führt von der markierten Adresse aus in entgegengesetzter zeitlicher Reihenfolge, d. h. in absteigender Zählreihenfolge der Adressen, eine Korrelation mit dem gespeicherten codierten Signal durch. Stellt der digitale Signalprozessor 228 ein Korrelationsmaximum fest, so notiert er die dem Maximum entsprechende Adresse, die der Adressenzähler 223b bzw. 223a, anzeigt und stellt die Differenz zwischen der durch die Synchronisationseinrichtung 226 markierten Adresse und der Adresse, die dem Korrelationsmaximum entspricht, her. Diese Differenz ergibt multipliziert mit der Periodendauer des Mastertakts den Korrekturwert, d. h. die Zeitdauer, die vom Schätzauftrittszeitpunkt abgezogen werden muß, um den tatsächlichen Zeitpunkt zu bestimmen, zu dem das vorbestimmte Informationswort im codierten Signal und damit an der Empfangsantenne 120 (Fig. 2) aufgetreten ist.

Im nachfolgenden wird auf die zeitliche Auflösung eingegangen, die durch den Korrelator 228 erreicht werden kann. Obwohl die In-Phase-Komponente und die Quadratur-Komponente des codierten Signals analoge Signale sind, und rein theoretisch die maximal erreichbare zeitliche Auflösung unendlich ist, wenn das codierte Signal kein Gleichsignal ist, existieren selbstverständlich praktische Grenzen. Wenn der extreme Fall betrachtet wird, daß das codierte Signal am Ausgang des IRD-Tuners 126b ein sehr niederfrequentes Signal ist, so ist rein theoretisch dennoch eine unendlich hohe zeitliche Auflösung erforderlich, da rein theoretisch zwei benachbarte Punkte niemals genau denselben Wert haben. In der Praxis existiert jedoch bereits durch die Abtastung und Analog/Digital-Wandlung ein Quantisierungsverlust, derart, daß bereits hierdurch die Genauigkeit verringert wird. So kann allgemein gesagt werden, daß die zeitliche Auflösung mit zunehmender Frequenz des codierten Signals im Basisband ansteigt, da bei zunehmender Frequenz die Änderung zwischen zwei um einen konstanten zeitlichen Abstand benachbarten Punkten des codierten Signals immer größer wird.

Nach dem Abtasttheorem muß die durch den Mastertaktgenerator 234 erzeugte Mastertaktfrequenz mindestens doppelt so hoch wie die höchste Frequenz des codierten Signals sein. In der Praxis wird jedoch eine vielleicht vier- bis achtfache Überabtastung eingesetzt. Eine noch höhere Überabtastung führt oftmals zu keiner zusätzlichen Zeitauflösung, da die Genauigkeit der Interpolation nicht mehr erheblich gesteigert werden kann. Wird eine sehr hohe Überabtastung eingesetzt, so kann unter Umständen auf eine Interpolation verzichtet werden. Im Sinne preisgünstiger Bauelemente wird jedoch eine möglichst niedrige Mastertaktfrequenz in Verbindung mit entsprechenden Interpolationsverfahren bevorzugt. Die zeitliche Auflösung wird daher nicht allein durch die Mastertaktfrequenz bestimmt, sondern durch das verwendete Interpolationsverfahren in Verbindung mit dem zugrunde liegenden Mastertakt.

Im nachfolgenden wird die Funktionsweise der in Fig. 3 gezeigten Zeitbestimmungseinrichtung 22 zusammengefaßt. Wenn eine bekannte Sequenz auf Bitstromebene erfaßt wird, wird das Aufzeichnen der QPSK-Signalform am Ausgang des IRD-Tuners 126b bei einem bevorzugten Ausführungsbeispiel der Erfindung angehalten. Zur "Off-Line"-Verarbeitung wird dann der RAM-Speicher 222a und der RAM-Speicher 222b, die vorzugsweise als FIFO-Speicher ausgeführt sind, nicht weiter beschrieben. Der Mastertaktgenerator 234, der bei einem bevorzugten Ausführungsbeispiel auf eine externe 10-MHz-Referenz synchronisiert ist, liefert den Referenztakt für alle internen Verarbeitungsmodule. Der Bitkomparator 224 erfaßt das Auftreten des Informationsworts auf Bitstromebene. Über die Synchronisationseinrichtung 226 wird das Auftreten des Informationsworts im Bitstrom markiert, um den Schätzauftrittszeitpunkt zu erhalten. Dieses Signal führt zu einer deterministischen Art und Weise der Markierung des Auftretens des vorbestimmten Informationsworts im Bitstrom und liefert eine relative Zeitgenauigkeit. Die gesamte nachfolgende Datenverarbeitung kann auf diesen Zeitpunkt mittels ganzzahliger Vielfacher der A/D-Taktfrequenzperiodendauer bezogen werden.

Das analoge I- und das analoge Q-Signal werden durchgehend durch die A/D-Wandler 220a, 220b digitalisiert und in den Speichern 222a bzw. 222b gespeichert. Das Ausgangssignal der Synchronisationseinrichtung 226 führt zu einem "Einfrieren" der Speicher. Die Länge des Speichers ist ausreichend, um alle Laufzeiten durch die Anordnung aus QPSK-Demodulator, FEC-Decodierer und MPEG-Demultiplexer in dem IRD-Empfänger 126 zu kompensieren. Die gespeicherten Abtastwerte haben ferner einen bekannten Versatz zum Schätzauftrittszeitpunkt.

Der digitale Signalprozessor 228 erhält bzw. erzeugt selbst das vorzugsweise analoge Referenzsignal, das zur Korrelation des bekannten Bitmusters und der benachbarten Datenpakete, die an sich nicht bekannt sind, benötigt wird.

Eine wesentliche Eigenschaft der vorliegenden Erfindung besteht darin, daß das Referenzsignal aufgrund des decodierten Bitstroms erzeugt werden kann, um dasselbe Energieverteilungsverfahren, durch das das vorbestimmte Informationswort mit den benachbarten Datenpaketen "verbunden" wird, im Empfänger zu simulieren.

Die Korrelation im digitalen Signalprozessor 228 ergibt eine Korrelationsspitze an einer bestimmten Abtastwertposition, d. h. an einer bestimmten Speicheradresse, aus der der Korrekturwert ermittelt wird, der dann zu einer Systemsteuerung (in Fig. 3 nicht gezeigt) geliefert werden kann. Die gesamte Zeitsteuerung, z. B. das Rücksetzen der RAM-Speicher 222a, 222b oder das Starten des Meß/Korrelations-Verfahrens und die Schnittstelle zu der Systemsteuerung werden ebenfalls durch den digitalen Signalprozessor 228 gehandhabt.

Das Auftreten der Korrelationsspitze kann entweder mit einer zweiten Korrelationsspitze verglichen werden, die von einem Referenzsignal abgeleitet wird, das vorzugsweise das Uplink-Signal ist, um die Roundtrip-Laufzeit zu erhalten, oder mit einer Absolutzeitreferenz verglichen werden, z. B. mit einem Universalzeit-koordinierten (UTC-; UTC = Universal Time Coordinated) Sekundenpuls.

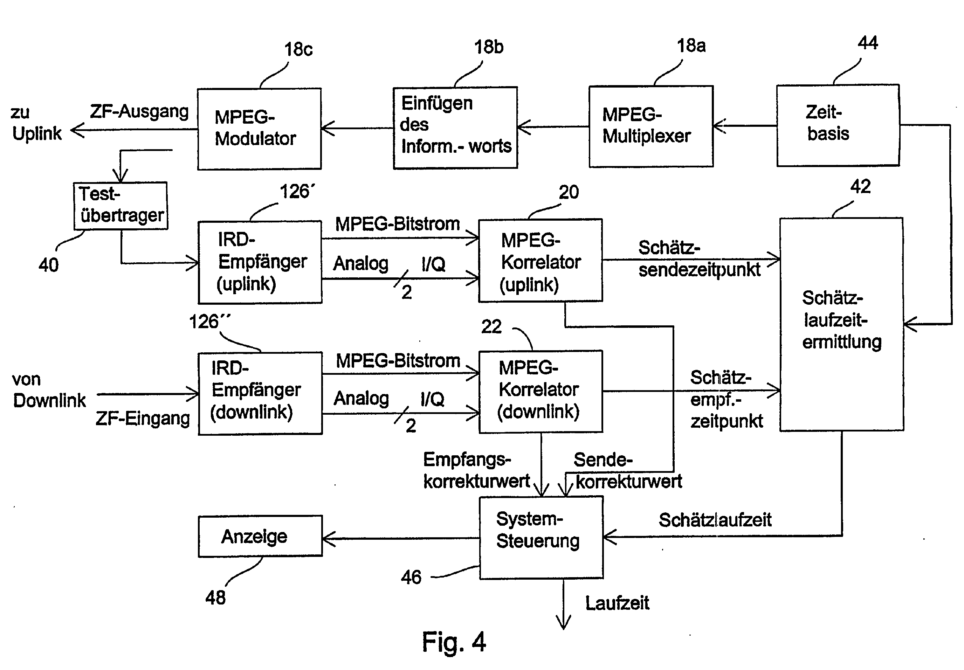

Fig. 4 zeigt ein System zum Bestimmen der Laufzeit eines codierten Signals von einem ersten Ort, z. B. von einem Sender, zu einem zweiten Ort, z. B. zu einem Empfänger, wobei das Signal beispielsweise von dem Sender zu einer Empfangs/Sendestation und dann von der Empfangs/Sendestation zu dem Empfänger übertragen werden kann. Die Empfangs/Sendestation kann beispielsweise der Satellit 10 (Fig. 1) sein. Das in Fig. 4 gezeigte System kann beispielsweise in der Bodenstation 12 angeordnet sein. Es umfaßt einen MPEG-Multiplexer, um Audiosignale, Videosignale, Datensignale und dergleichen zu multiplexen, um einen Datenstrom zu erzeugen. In diesen Datenstrom wird durch eine Einrichtung 18b zum Einfügen des Informationsworts, d. h. der Zeitmarke, ein vorbestimmtes Informationswort eingeführt, das durch einen MPEG-Modulator einer Kanalcodierung in Form einer Vorwärtsfehlerkorrektur, einer Verschaltungscodierung, einer Verschachtelung ("Interleaving") und dergleichen unterzogen wird, dann vorzugsweise QPSK-moduliert und auf eine Zwischenfrequenz umgesetzt wird. Das Zwischenfrequenz-Signal wird an dem Ausgang des MPEG-Modulators 18c zu einer Hochfrequenz-Baugruppe (nicht gezeigt) ausgegeben, um über die Sendeantenne der Bodenstation 12 zu einem Satelliten übertragen zu werden. Die Übertragung von der Bodenstation zum Satelliten wird als Uplink-Übertragung bezeichnet. Das Zwischenfrequenz-Signal wird über einen Testübertrager 40 einem IRD-Empfänger 126' zugeführt, der dem IRD-Empfänger 126 (Fig. 3) entspricht. Da derselbe als Referenz das Uplink-Signal wieder empfängt und decodiert, wird derselbe auch als IRD-Empfänger (Uplink) bezeichnet. Derselbe liefert als Ausgangssignal einerseits den decodierten MPEG-Bitstrom und andererseits die In-Phase-Komponente und die Quadratur-Komponente des analogen codierten Signals zu dem MPEG-Korrelator (Uplink) 20, der der Referenzzeitbestimmungseinrichtung 20 von Fig. 1 entspricht.

Das in Fig. 4 gezeigte System umfaßt ferner einen IRD-Empfänger (Downlink) 126'', der das Empfangssignal der Bodenstation 12, das bereits auf die Zwischenfrequenz umgesetzt ist, erhält. Der IRD-Empfänger 126'' kann ebenso wie der IRD-Empfänger 126' identisch zu dem IRD-Empfänger 126 (Fig. 3) ausgeführt sein. Derselbe liefert daher einen decodierten MPEG-Bitstrom sowie die analoge In-Phase-Komponente und die analoge Quadratur-Komponente des codierten Signals zu dem MPEG-Korrelator (Downlink) 22. Der MPEG-Korrelator (Downlink) 22 entspricht der Zeitbestimmungseinrichtung 22 von Fig. 1. Die MPEG-Korrelatoren 20 und 22 sind wie in Verbindung mit Fig. 3 beschrieben aufgebaut. Der MPEG-Korrelator (Uplink) 20 liefert als Ausgangswert einerseits einen Schätz-Sendezeitpunkt und einen Sende-Korrekturwert. Analog dazu liefert der MPEG-Korrelator (Downlink) 22 einen Schätz-Empfangszeitpunkt und einem Empfangs-Korrekturwert.

Bei dem in Fig. 4 gezeigten Ausführungsbeispiel werden der Schätzsendezeitpunkt und der Schätzempfangszeitpunkt in eine Einrichtung 42 zur Ermittlung der Schätzlaufzeit eingespeist. Die Einrichtung 42 wird ebenfalls wie der MPEG-Multiplexer 18a von einer Zeitbasis 44 versorgt, die ebenfalls die Referenzeitbasis für die IRD-Empfänger und die MPEG-Korrelatoren sein kann. Die Schätzlaufzeitermittlungseinrichtung 42 liefert an ihrem Ausgang eine Schätzlaufzeit, die ebenfalls wie der Empfangskorrekturwert und der Sende-korrekturwert in eine Systemsteuerung 46 eingespeist werden. Die Systemsteuerung 46 bildet eine Differenz zwischen der Schätzlaufzeit und der Differenz aus dem Sende-Korrekturwert und dem Empfangs-Korrekturwert, um die tatsächliche Laufzeit eines Signals von der Antenne der Bodenstation 12 zum Satelliten 10 und zurück, d. h. über die Wege A1 und A2 (Fig. 1), zu erhalten. Die Systemsteuerung 46 ist vorzugsweise mit einer Anzeige 48 verbunden, um beispielsweise eine Alarmanzeige zu liefern, wenn die Laufzeit unerwartete Werte annimmt, was bedeuten kann, daß der Satellit 10 nicht mehr in seiner erwünschten Position ist.

In Abweichung vom vorliegenden Ausführungsbeispiel, bei dem das codierte Signal ein analoges Signal ist, während das decodierte Signal ein digitales Signal ist, können beide Signale auch als analoge Signale, als digitale Signale oder einerseits als digitales Signal und andererseits als analoges Signal vorliegen. Wesentlich ist jedoch, daß mittels des codierten Signals eine höhere Zeitauflösung als mittels des decodierten Signals erreichbar ist. Liegen beide Signale beispielsweise als analoge Signale vor, so wird das codierte Signal eine höhere Frequenz als das decodierte Signal aufweisen, wobei durch das Signal mit höherer Frequenz eine höhere Zeitauflösung erreichbar ist. Liegen beide Signale als digitale Signale vor, so wird das codierte Signal eine höhere Taktfrequenz als das decodierte Signal haben, derart, daß mittels eines Bitkomparators für das codierte Signal eine Korrelation des codierten Signals mit einem Referenzsignal, das von dem decodierten Signal und dem Informationswort abgeleitet ist, ein Korrelationsmaximum und damit ein Korrekturwert ermittelt werden kann. Es ist ferner möglich, daß das codierte Signal ein digitales Signal ist, während das decodierte Signal ein analoges Signal ist. In diesem Fall wäre die Frequenz des decodierten analogen Signals derart bezüglich der Taktfrequenz des codierten digitalen Signals beschaffen, daß ein Bitkomparator für das digitale Signal eine höhere zeitliche Auflösung liefert als ein Korrelator für das decodierte analoge Signal.

In Abweichung vom vorliegenden Ausführungsbeispiel, bei dem das codierte Signal ein Basisbandsignal mit einer Trägerfrequenz von 0 Hz war, kann die vorliegende Erfindung auch dahingehend modifiziert werden, daß die Trägerfrequenz ungleich 0 ist. In diesem Fall muß diese Tatsache jedoch bei der Erzeugung des Referenzsignals berücksichtigt werden.

Obwohl die vorliegende Erfindung in Verbindung mit einem Satellitenortungssystem beschrieben worden ist, können die erfindungsgemäßen Vorrichtungen und Verfahren ebenfalls für jede beliebige Laufzeitbestimmung eines Signals eingesetzt werden, das beispielsweise auch leitungsgebunden und nicht per Freiraumübertragung von einem ersten Ort zu einem zweiten Ort übermittelt wird.

## Patentansprüche

1. Verfahren zur Bestimmung des Auftrittszeitpunkts eines codierten Signals welches ein vorbestimmtes Informationswort enthält,
wobei ein geschätzter Auftrittszeitpunkt des Signals durch eine erste Korrelation (224) des decodierten Signals mit dem vorbestimmten Informationswort ermittelt wird,
und ein Korrekturwert des Auftrittszeitpunktes durch eine zweite Korrelation (228) des codierten Signals mit dem codierten vorbestimmten Informationswort ermittelt wird.

2. Verfahren nach Anspruch 1, mit folgenden Schritten:
Abtasten (220) des codierten Signals und Speichern (222) der Abtastwerte in Zuordnung zu einer Zeitbasis;
Decodieren (124) des codierten Signals, um eine decodierte Version des Signals, die das vorbestimmte Informationswort aufweist, zu erhalten;
erstes Korrelieren (224) der decodierten Version des Signals mit dem vorbestimmten Informationswort;
bei Auftreten des vorbestimmten Informationsworts in der decodierten Version des Signals, Markieren (226) des Zeitpunkts des Auftretens bezüglich der Zeitbasis, um einen Schätzauftrittszeitpunkt zu erhalten;
zweites Korrelieren (228) der gespeicherten Abtastwerte des codierten Signals mit einem Referenzsignal, das das codierte vorbestimmte Informationswort aufweist;
bei Auftreten eines Korrelationsmaximums im Schritt des zweiten Korrelierens (228), Bestimmen (230) der Differenz zwischen dem markierten Zeitpunkt und dem Zeitpunkt des Auftretens des Korrelationsmaximums, um einen Korrekturwert zu erhalten; und
Kombinieren (230) des Schätzauftrittszeitpunkts und des Korrekturwerts, um den Auftrittszeitpunkt zu erhalten.

3. Verfahren nach Anspruch 1,
bei dem das codierte Signal ein In-Phase-Teilsignal (I) und ein Quadratur-Teilsignal (Q) aufweist,
bei dem die decodierte Version des Signals einen Bitstrom aufweist; und
bei dem das vorbestimmte Informationswort eine vorbestimmte Folge von Bits umfaßt.

4. Verfahren nach Anspruch 2 oder 3, bei dem das codierte Signal ein Nutzsignal einer Multimedia-Datenübertragung ist, und bei dem das Informationswort in das Nutzsignal eingebettet ist.

5. Verfahren nach einem der vorhergehenden Ansprüche, bei dem das codierte Signal mittels eines Vorwärtsfehlerkorrekturverfahrens codiert ist, das eine Faltungscodierung, eine Energieverteilungscodierung oder eine Verschachtelung sein kann, und bei dem der Schritt des Decodierens (124) des codierten Signals das Vorwärtsfehlerkorrekturverfahren rückgängig macht.

6. Verfahren nach einem der Ansprüche 3 bis 5, bei dem nach dem Schritt des Abtastens (220a, 220b) des In-Phase-Teilsignals (I) und des Quadratur-Teilsignals (Q) die Schritte des Analog/Digital-Wandelns (220a, 220b) der Abtastwerte für beide Teilsignale durchgeführt werden, wobei das Abtasten beider Teilsignale und das Speichern der digitalen Abtastwerte für beide Teilsignale synchron durchgeführt werden.

7. Verfahren nach einem der Ansprüche 3 bis 6, bei dem im Schritt des ersten Korrelierens (224) der Bitstrom mit der vorbestimmten Folge von Bits, die das Informationswort darstellt, bitweise verglichen wird.

8. Verfahren nach Anspruch 7, bei dem im Schritt des Markierens (226) der Schätzauftrittszeitpunkt auf die Zeitbasis (234) synchronisiert wird.

9. Verfahren nach Anspruch 8, bei dem die Zeitbasis einen Mastertaktgenerator (234) aufweist, und bei dem im Schritt des Speicherns (222) eine chronologische Speicherung der Abtastwerte durchgeführt wird, und
bei dem der Schritt des Markierens (226) folgenden Schritt aufweist:
Anhalten des Speicherns (222), derart, daß der aktuellste gespeicherte Abtastwert einen zeitlichen Bezugspunkt zu der Zeitbasis (234) darstellt, wobei zeitlich vorausgehende gespeicherte Abtastwerte um entsprechende Vielfache der Periodendauer des Mastertakts zeitlich von dem aktuellsten Abtastwert entfernt sind.

10. Verfahren nach Anspruch 9, bei dem im Schritt des zweiten Korrelierens (228) ausgehend von dem aktuellsten gespeicherten Abtastwert in entgegengesetzter chronologischer Reihenfolge Abtastwerte des Referenzsignals mit gespeicherten Abtastwerten korreliert werden.

11. Verfahren nach einem der vorhergehenden Ansprüche, bei dem vor dem Schritt des zweiten Korrelierens (228) ferner folgender Schritt ausgeführt wird:
Erzeugen des Referenzsignals unter Verwendung des vorbestimmten Informationsworts und des Teils der decodierten Version des Signals, der nicht auf das Informationswort bezogen ist.

12. Verfahren nach einem der Ansprüche 3 bis 10, bei dem vor dem Schritt des zweiten Korrelierens (228) ferner folgender Schritt ausgeführt wird:
Erzeugen des Referenzsignals unter Verwendung der vorbestimmten Folge von Bits, die das vorbestimmte Informationswort umfaßt, und der Datenbits, die in der Nähe des vorbestimmten Informationsworts in dem decodierten Bitstrom liegen.

13. Verfahren nach Anspruch 12, bei dem im Schritt des Bestimmens (230) der Differenz die Anzahl der Perioden des Mastertakts von dem aktuellsten gespeicherten Abtastwert zu der Taktperiode, in der das Korrelationsmaximum auftritt, ermittelt wird, um den Korrekturwert zu erhalten.

14. Verfahren nach einem der vorhergehenden Ansprüche, bei dem die Zeitbasis eine Uhr zur Messung der absoluten Zeit aufweist, und bei dem im Schritt des Markierens (226) ein absoluter Zeitpunkt als Schätzauftrittszeitpunkt markiert wird.

15. Verfahren nach einem der Ansprüche 1 bis 13, bei dem die Zeitbasis auf die Erzeugung des codierten Signals bezogen ist, wobei im Schritt des Markierens (226) ein relativer Zeitpunkt bezüglich der Erzeugung des codierten Signals als Schätzauftrittszeitpunkt markiert wird.

16. Verfahren zum Bestimmen der Laufzeit eines codierten Signals von einem Sender zu einem Empfänger nach dem Verfahren von Anspruch 1, mit folgenden Schritten:
Erzeugen (18) eines codierten Signals in dem Sender, Übertragen (A1, A2) des codierten Signals zu dem Empfänger;
Bestimmen (20) eines Schätz-Sende-Zeitpunkts und eines Sende-Korrekturwerts, durch folgende Schritte:
Abtasten (220) des codierten Signals und Speicher (222) der Abtastwerte in Zuordnung zu einer Sende-Zeitbasis;
Decodieren (124) des codierten Signals, um eine decodierte Version des Signals, die das vorbestimmte Informationswort aufweist, zu erhalten;
erstes Korrelieren (224) der decodierten Version des Signals mit dem vorbestimmten Informationswort;
bei Auftreten des vorbestimmten Informationsworts in der decodierten Version des Signals, Markieren (226) des Zeitpunkts des Auftretens bezüglich der Sende-Zeitbasis, um einen Schätzsendezeitpunkt zu erhalten;
zweites Korrelieren (228) der gespeicherten Abtastwerte des codierten Signals mit einem Referenzsignal, das das codierte vorbestimmte Informationswort aufweist; und
bei Auftreten eines Korrelationsmaximums im Schritt des zweiten Korrelierens (228), Bestimmen (230) der Differenz zwischen dem markierten Zeitpunkt und dem Zeitpunkt des Auftretens des Korrelationsmaximums, um einen Sende-Korrekturwert zu erhalten;
Bestimmen (22) eines Schätz-Empfangs-Zeitpunkts und eines Empfangs-Korrekturwerts, durch folgende Schritte:
Abtasten (220) des codierten Signals und Speichern (222) der Abtastwerte in Zuordnung zu einer
Empfangs-Zeitbasis;
Decodieren (124) des codierten Signals, um eine decodierte Version des Signals, die das vorbestimmte Informationswort aufweist, zu erhalten;
erstes Korrelieren (224) der decodierten Version des Signals mit dem vorbestimmten Informationswort;
bei Auftreten des vorbestimmten Informationsworts in der decodierten Version des Signals, Markieren (226) des Zeitpunkts des Auftretens bezüglich der Empfangs-Zeitbasis, um einen Schätzempfangszeitpunkt zu erhalten;
zweites Korrelieren (228) der gespeicherten Abtastwerte des codierten Signals mit einem Referenzsignal, das das codierte vorbestimmte Informationswort aufweist; und
bei Auftreten eines Korrelationsmaximums im Schritt des zweiten Korrelierens (228) Bestimmen (230) der Differenz zwischen dem markierten Zeitpunkt und dem Zeitpunkt des Auftretens des Korrelationsmaximums, um einen Empfangs-Korrekturwert zu erhalten;
Ermitteln (42, 46) der Laufzeit des Signals von dem Sender zu dem Empfänger durch Kombinieren des Schätz-Sende-Zeitpunkts und des Sende-Korrekturwerts, und des Schätz-Empfangs-Zeitpunkts und des Empfangs-Korrekturwerts.

17. Verfahren nach Anspruch 16, bei dem das Signal zwischen dem Sender und dem Empfänger zu einer Empfangs/Sendestation, die ein Satellit (10) sein kann, übermittelt wird, wobei die ermittelte Laufzeit zur Bestimmung der Entfernung des Satelliten von dem Empfänger verwendet wird.

18. Verfahren nach Anspruch 16 oder 17, bei dem die Sendezeitbasis und die Empfangszeitbasis einen aufeinander synchronsierten Mastertakt (234) aufweisen, wobei die Laufzeit aus der Anzahl der Perioden zwischen dem Sendezeitpunkt und dem Empfangszeitpunkt ermittelt wird.

19. Verfahren nach Anspruch 16 oder 17, bei dem sowohl die Sendezeitbasis als auch die Empfangszeitbasis Uhren zur Messung der absoluten Zeit sind, wobei die Laufzeit zum Subtrahieren des absoluten Empfangszeitpunkts von dem absoluten Sendezeitpunkt ermittelt wird.

20. Verfahren nach einem der Ansprüche 16 bis 19, bei dem das codierte Signal ein nach einem MPEG-Standard codiertes DVB-Signal ist, wobei die Codierung eine Faltungscodierung, eine Energieverteilungscodierung und/oder eine Verschachtelungscodierung umfaßt.

21. Vorrichtung zur Bestimmung des Auftrittszeitpunkts eines codierten Signals welches ein vorbestimmtes Informationswort enthält,
wobei ein geschätzter Auftrittszeitpunkt des Signals durch einen ersten Korrelator (224) ermittelt wird, der das decodierte Signal mit dem vorbestimmten Informationswort korreliert,
und ein Korrekturwert des Auftrittszeitpunktes durch einen zweiten Korrelator (228) ermittelt wird, der das codierte Signal mit dem codierten vorbestimmten Informationswort korreliert.

22. Vorrichtung nach Anspruch 21, mit folgenden Merkmalen:
einer Einrichtung (220) zum Abtasten des codierten Signals und Speicher (222) der Abtastwerte in Zuordnung zu der Zeitbasis;
einer Einrichtung (124) zum Decodieren des codierten Signals, um eine decodierte Version des Signals, die das vorbestimmte Informationswort aufweist, zu erhalten;
den ersten Korrelator einer Einrichtung (224) zum Vergleichen der decodierten Version des Signals mit dem vorbestimmten bekannten Informationswort; einer Einrichtung zum Markieren (226) des Zeitpunkts des Auftretens bezüglich der Zeitbasis, um einen Schätzauftrittszeitpunkt zu erhalten, bei Auftreten des vorbestimmten Informationsworts in der decodierten Version des Signals;
dem zweiten Korrelator (228) zum Korrelieren der gespeicherten Abtastwerte des codierten Signals mit einem Referenzsignal, das das codierte vorbestimmte Informationswort aufweist;
einer Einrichtung zum Bestimmen (230) der Differenz zwischen dem markierten Zeitpunkt und dem Zeitpunkt des Auftretens des Korrelationsmaximums, um einen Korrekturwert zu erhalten, bei Auftreten eines Korrelationsmaximums im zweiten Korrelator (228); und
einer Einrichtung (230) zum Kombinieren des Schätzauftrittszeitpunkts und des Korrekturwerts, um den Auftrittszeitpunkt zu erhalten.

23. Vorrichtung zum Bestimmen der Laufzeit eines codierten Signals von einem Sender zu einem Empfänger mit der Vorrichtung von Anspruch 21, mit folgenden Merkmalen:
einer Einrichtung zum Erzeugen (18) eines codierten Signals in dem Sender,
einer Einrichtung zum Übertragen (A1, A2) des codierten Signals zu dem Empfänger;
einer Einrichtung (20) zum Bestimmen eines Schätz-Sende-Zeitpunkts und eines Sende-Korrekturwerts, die folgende Merkmale aufweist:
eine Einrichtung zum Abtasten (220) des codierten Signals und Speicher (222) der Abtastwerte in Zuordnung zu einer Sende-Zeitbasis;
eine Einrichtung zum Decodieren (124) des codierten Signals, um eine decodierte Version des Signals, die das vorbestimmte aufweist, zu erhalten;
dem ersten Korrelator (224) zum Vergleichen der decodierten Version des Signals mit dem vorbestimmten Informationswort;
eine Einrichtung zum Markieren (226) des Zeitpunkts des Auftretens bezüglich der Sende-Zeitbasis, um einen Schätzsendezeitpunkt zu erhalten, bei Auftreten des vorbestimmten Informationsworts in der decodierten Version des Signals;
dem zweiten Korrelator (228) zum Korrelieren der gespeicherten Abtastwerte des codierten Signals mit einem Referenzsignal, das das codierte vorbestimmte Informationswort aufweist; und
eine Einrichtung zum Bestimmen (230) der Differenz zwischen dem markierten Zeitpunkt und dem Zeitpunkt des Auftretens des Korrelationsmaximums, um einen Sende-Korrekturwert zu erhalten, bei Auftreten eines Korrelationsmaximums im Schritt des Korrelierens;
einer Einrichtung (22) zum Bestimmen eines Schätz-Empfangs-Zeitpunkts und eines Empfangs-Korrekturwerts, die folgende Merkmale aufweist:
eine Einrichtung zum Abtasten (220) des codierten Signals und Speichern (222) der Abtastwerte in Zuordnung zu einer Empfangs-Zeitbasis;
eine Einrichtung zum Decodieren (124) des codierten Signals, um eine decodierte Version des Signals, die das vorbestimmte Informationswort aufweist, zu erhalten;
dem ersten Korrelator (224) zum Vergleichen der decodierten Version des Signals mit dem vorbestimmten Informationswort;
eine Einrichtung zum Markieren (226) des Zeitpunkts des Auftretens bezüglich der Empfangs-Zeitbasis, um einen Schätzempfangszeitpunkt zu erhalten, bei Auftreten des codierten/decodierten Informationsworts in der decodierten Version des Signals;
dem zweiten Korrelator (228) zum Korrelieren der gespeicherten Abtastwerte des codierten Signals mit einem Referenzsignal, das das codierte vorbestimmte Informationswort aufweist; und
eine Einrichtung zum Bestimmen (230) der Differenz zwischen dem markierten Zeitpunkt und dem Zeitpunkt des Auftretens des Korrelationsmaximums, um einen Empfangs-Korrekturwert zu erhalten, bei Auftreten eines Korrelationsmaximums im Schritt des Korrelierens;
einer Einrichtung (42, 46) zum Ermitteln der Laufzeit des Signals von dem Sender zu dem Empfänger durch Kombinieren des Schätz-Sende-Zeitpunkts und des Sende-Korrekturwerts, und des Schätz-Empfangs-Zeitpunkts und des Empfangs-Korrekturwerts.

24. Vorrichtung nach Anspruch 23, bei der die Einrichtung zum Ermitteln der Laufzeit des Signals von dem Sender zu dem Empfänger angeordnet ist, um beim Kombinieren
- die Differenz zwischen dem Schätz-Empfangszeitpunkt und dem Schätz-Sendezeitpunkt zu berechnen, um eine Schätzlaufzeit zu erhalten, und
- von der Schätzlaufzeit die Differenz zwischen dem Sende-Korrekturwert und dem Empfangs-Korrekturwert zu subtrahieren, um die Laufzeit des Signals zu erhalten.

25. Vorrichtung nach Anspruch 23, bei der die Einrichtung zum Ermitteln der Laufzeit des Signals von dem Sender zu dem Empfänger angeordnet ist, um beim Kombinieren
- die Differenz zwischen dem Schätz-Sende-Zeitpunkt und dem Sende-Korrekturwert zu berechnen, um den genauen Sende-Zeitpunkt zu erhalten,
- die Differenz zwischen dem Schätz-Empfangs-Zeitpunkt und dem Empfangs-Korrekturwert zu berechnen, um den genauen Empfangs-Zeitpunkt zu erhalten, und
- die Differenz zwischen dem genauen Empfangs-Zeitpunkt und dem genauen Sende-Zeitpunkt zu berechnen, um die Laufzeit des Signals zu erhalten.

## Claims

1. Method for determining the occurrence time of a coded signal containing a predetermined information word,
wherein an estimated occurrence time of the signal is determined by a first correlation (224) of the decoded signal with the predetermined information word, and
a correction value of the occurrence time is determined by a second correlation (228) of the coded signal with the coded predetermined information word.

2. Method of claim 1, comprising:
sampling (220) the coded signal and storing (222) the samples in association with a time base;
decoding (124) the coded signal to obtain a decoded version of the signal comprising the predetermined information word;
first correlating (224) of the decoded version of the signal with the predetermined information word;
upon occurrence of the predetermined information word in the decoded version of the signal, marking (226) the time of occurrence with respect to the time base to obtain an estimated occurrence time;
second correlating (228) of the stored samples of the coded signal with a reference signal comprising the coded predetermined information word;
upon occurrence of a correlation maximum in the step of the second correlating (228), determining (230) the difference between the marked time and the time of occurrence of the correlation maximum to obtain a correction value; and
combining (230) the estimated occurrence time and the correction value to obtain the occurrence time.

3. Method of claim 1,
wherein the coded signal comprises an in-phase sub-signal (I) and a quadrature sub-signal (Q),
wherein the decoded version of the signal comprises a bitstream; and
wherein the predetermined information word includes a predetermined sequence of bits.

4. Method of claim 2 or 3, wherein the coded signal is a payload signal of a multi-media data transmission, and wherein the information word is embedded in the payload signal.

5. Method of one of the preceding claims, wherein the coded signal is coded by means of a forward error correction method, which may be convolution coding, energy distribution coding or interleaving, and wherein the step of decoding (124) the coded signal reverses the forward error correction method.

6. Method of one of claims 3 to 5, wherein after the step of sampling (220a, 220b) the in-phase sub-signal (I) and the quadrature sub-signal (Q), the steps of analog-to-digital converting (220a, 220b) the samples for both sub-signals are performed, wherein the sampling of both sub-signals and the storing of the digital samples for both sub-signals are performed synchronously.

7. Method of one of claims 3 to 6, wherein, in the step of the first correlating (224), the bitstream is bitwise compared to the predetermined sequence of bits represented by the information word.

8. Method of claim 7, wherein, in the step of marking (226), the estimated occurrence time is synchronized to the time base (234).

9. Method of claim 8, wherein the time base comprises a master clock generator (234), and wherein, in the step of storing (222), chronological storage of the samples is performed, and
wherein the step of marking (226) comprises:
stopping the storing (222) such that the most current stored sample represents a time reference point with respect to the time base (234), wherein stored samples previous in time are apart in time from the most current sample by corresponding multiples of the period duration of the master clock.

10. Method of claim 9, wherein, in the step of the second correlating (228), starting from the most current stored sample, samples of the reference signal are correlated with stored samples in opposite chronological order.

11. Method of one of the preceding claims, wherein, prior to the step of the second correlating (228), the following step is further executed:
generating the reference signal using the predetermined information word and the part of the decoded version of the signal not related to the information word.

12. Method of one of claims 3 to 10, wherein, prior to the step of the second correlating (228), the following step is further executed:
generating the reference signal using the predetermined sequence of bits including the predetermined information word, and the data bits close to the predetermined information word in the decoded bitstream.

13. Method of claim 12, wherein, in the step of determining (230) the difference, the number of periods of the master clock from the most current stored sample to the clock period in which the correlation maximum occurs is determined to obtain the correction value.

14. Method of one of the preceding claims, wherein the time base comprises a clock for measuring the absolute time, and wherein, in the step of marking (226), an absolute time is marked as estimated occurrence time.

15. Method of one of claims 1 to 13, wherein the time base is related to the generation of the coded signal, wherein, in the step of marking (226), a relative time with respect to the generation of the coded signal is marked as estimated occurrence time.

16. Method for determining the run time of a coded signal from a transmitter to a receiver according to the method of claim 1, comprising:
generating (18) a coded signal in the transmitter;
transmitting (A1, A2) the coded signal to the receiver;
determining (20) an estimated transmission time and a transmission correction value by the following steps:
sampling (220) the coded signal and storing (222) the samples in association with a transmission time base;
decoding (124) the coded signal to obtain a decoded version of the signal comprising the predetermined information word;
first correlating (224) of the decoded version of the signal with the predetermined information word;
upon occurrence of the predetermined information word in the decoded version of the signal, marking (226) the time of occurrence with respect to the transmission time base to obtain an estimated transmission time;
second correlating (228) of the stored samples of the coded signal with a reference signal comprising the coded predetermined information word; and
upon occurrence of a correlation maximum in the step of the second correlating (228), determining (230) the difference between the marked time and the time of occurrence of the correlation maximum to obtain a transmission correction value;
determining (22) an estimated reception time and a reception correction value by the following steps:
sampling (220) the coded signal and storing (222) the samples in association with a reception time base;
decoding (124) the coded signal to obtain a decoded version of the signal comprising the predetermined information word;
first correlating (224) of the decoded version of the signal with the predetermined information word;
upon occurrence of the predetermined information word in the decoded version of the signal, marking (226) the time of occurrence with respect to the reception time base to obtain an estimated reception time;
second correlating (228) of the stored samples of the coded signal with a reference signal comprising the coded predetermined information word; and
upon occurrence of a correlation maximum in the step of the second correlating (228), determining (230) the difference between the marked time and the time of occurrence of the correlation maximum to obtain a reception correction value;
determining (42, 46) the run time of the signal from the transmitter to the receiver by combining the estimated transmission time and the transmission correction value, and the estimated reception time and the reception correction value.

17. Method of claim 16, wherein the signal between the transmitter and the receiver is transmitted to a transceiver station, which may be a satellite (10), wherein the determined run time is used for the determination of the distance of the satellite from the receiver.

18. Method of claim 16 or 17, wherein the transmission time base and the reception time base comprise a mutually synchronized master clock (234), wherein the run time is determined from the number of periods between the transmission time and the reception time.

19. Method of claim 16 or 17, wherein both the transmission time base and the reception time base are clocks for measuring the absolute time, wherein the run time is determined for subtracting the absolute reception time from the absolute transmission time.

20. Method of one of claims 16 to 19, wherein the coded signal is a DVB signal coded according to an MPEG standard, wherein the coding includes convolution coding, energy distribution coding and/or interleaving coding.

21. Device for determining the occurrence time of a coded signal containing a predetermined information word,
wherein an estimated occurrence time of the signal is determined by a first correlator (224) correlating the decoded signal with the predetermined information word, and
a correction value of the occurrence time is determined by a second correlator (228) correlating the coded signal with the coded predetermined information word.

22. Device of claim 21, comprising:
means (220) for sampling the coded signal and storing (222) the samples in association with the time base;
means (124) for decoding the coded signal to obtain a decoded version of the signal comprising the predetermined information word;
the first correlator (224) for comparing the decoded version of the signal to the predetermined information word;
means for marking (226) the time of occurrence with respect to the time base to obtain an estimated occurrence time, upon occurrence of the predetermined information word in the decoded version of the signal;
the second correlator (228) for correlating the stored samples of the coded signal with a reference signal comprising the coded predetermined information word;
means for determining (230) the difference between the marked time and the time of occurrence of the correlation maximum to obtain a correction value, upon occurrence of a correlation maximum in the second correlator (228); and
means (230) for combining the estimated occurrence time and the correction value to obtain the occurrence time.

23. Device for determining the run time of a coded signal from a transmitter to a receiver with the device of claim 21, comprising:
means for generating (18) a coded signal in the transmitter;
means for transmitting (A1, A2) the coded signal to the receiver;
means (20) for determining an estimated transmission time and a transmission correction value, comprising:
means for sampling (220) the coded signal and storing (222) the samples in association with a transmission time base;
means for decoding (124) the coded signal to obtain a decoded version of the signal comprising the predetermined information word;
the first correlator (224) for comparing the decoded version of the signal to the predetermined information word;
means for marking (226) the time of occurrence with respect to the transmission time base to obtain an estimated transmission time, upon occurrence of the predetermined information word in the decoded version of the signal;
the second correlator (228) for correlating the stored samples of the coded signal with a reference signal comprising the coded predetermined information word; and
means for determining (230) the difference between the marked time and the time of occurrence of the correlation maximum to obtain a transmission correction value, upon occurrence of a correlation maximum in the step of correlating;
means (22) for determining an estimated reception time and a reception correction value, comprising:
means for sampling (220) the coded signal and storing (222) the samples in association with a reception time base;
means for decoding (124) the coded signal to obtain a decoded version of the signal comprising the predetermined information word;
the first correlator (224) for comparing the decoded version of the signal to the predetermined information word;
means for marking (226) the time of occurrence with respect to the reception time base to obtain an estimated reception time, upon occurrence of the coded/decoded information word in the decoded version of the signal;
the second correlator (228) for correlating the stored samples of the coded signal with a reference signal comprising the coded predetermined information word; and
means for determining (230) the difference between the marked time and the time of occurrence of the correlation maximum to obtain a reception correction value, upon occurrence of a correlation maximum in the step of correlating;
means (42, 46) for determining the run time of the signal from the transmitter to the receiver by combining the estimated transmission time and the transmission correction value, and the estimated reception time and the reception correction value.

24. Device of claim 23, wherein the means for determining the run time of the signal from the transmitter to the receiver is arranged to
- calculate the difference between the estimated reception time and the estimated transmission time to obtain an estimated run time, and
- subtract the difference between the transmission correction value and the reception correction value from the estimated run time to obtain the run time of the signal,
when combining.

25. Device of claim 23, wherein the means for determining the run time of the signal from the transmitter to the receiver is arranged to
- calculate the difference between the estimated transmission time and the transmission correction value to obtain the precise transmission time,
- calculate the difference between the estimated reception time and the reception correction value to obtain the precise reception time, and
- calculate the difference between the precise reception time and the precise transmission time to obtain the run time of the signal,
when combining.

## Revendications

1. Procédé pour déterminer le moment d'arrivée d'un signal codé contenant un mot d'information prédéterminé,
un moment d'arrivée estimé du signal étant déterminé par une première corrélation (224) du signal décodé avec le mot d'information prédéterminé,
et une valeur de correction du moment d'arrivée étant déterminée par une deuxième corrélation (228) du signal codé avec le mot d'information prédéterminé codé.

2. Procédé selon la revendication 1, aux étapes suivantes consistant à :
balayer (220) le signal codé et mémoriser (222) les valeurs de balayage en association avec une base de temps ;
décoder (124) le signal codé, pour obtenir une version décodée du signal présentant le mot d'information prédéterminé;
effectuer une première corrélation (224) de la version décodée du signal avec le mot d'information prédéterminé ;
en cas de présence du mot d'information prédéterminé dans la version décodée du signal, marquer (226) le moment de l'arrivée par rapport à la base de temps, pour obtenir un moment d'arrivée estimé ;
effectuer une deuxième corrélation (228) des valeurs de balayage mémorisée du signal codé avec une signal de référence présentant le mot d'information prédéterminé codé ;
en cas de présence d'un maximum de corrélation dans l'étape de la deuxième corrélation (228), déterminer (230) la différence entre le moment marqué et le moment d'arrivée du maximum de corrélation, pour obtenir une valeur de correction ; et
combiner (230) le moment d'arrivée estimé et la valeur de correction, pour obtenir le moment d'arrivée.

3. Procédé selon la revendication 1,
dans lequel le signal codé présente un signal partiel en phase (I) et un signal partiel en quadrature (Q),
dans lequel la version codée du signal présente un train binaire, et
dans lequel le mot d'information prédéterminé comporte une succession de bits prédéterminée.

4. Procédé selon la revendication 2 ou 3, dans lequel le signal codé est un signal utile d'une transmission de données multimédia, et dans lequel le mot d'information est incorporé dans le signal utile.

5. Procédé selon l'une des revendications précédentes, dans lequel le signal codé est codé au moyen d'un procédé de correction d'erreur direct, qui peut être un codage à repliement, un codage à répartition d'énergie ou un emboîtement, et dans lequel l'étape de décodage (124) du signal codé annule le procédé de correction d'erreur direct.

6. Procédé selon l'une des revendications 3 à 5, dans lequel sont effectuées, après l'étape de balayage (220a, 220b) du signal partiel en phase (I) et du signal partiel en quadrature (Q), les étapes de conversion analogique/numérique (220a, 220b) des valeurs de balayage pour les deux signaux partiels, le balayage des deux signaux partiels et la mémorisation des valeurs de balayage numériques pour les deux signaux partiels étant effectués de manière synchrone.

7. Procédé selon l'une des revendications 3 à 6, dans lequel, à l'étape de la première corrélation (224), le train binaire est comparé, par bit, avec la succession prédéterminée de bits représentant le mot d'information.

8. Procédé selon la revendication 7, dans lequel, à l'étape de marquage (226), le moment d'arrivée estimé est synchronisé sur la base de temps (234).

9. Procédé selon la revendication 8, dans lequel la base de temps présente un générateur de cycle d'horloge maître (234), et dans lequel est effectuée, à l'étape de mémorisation (222), une mémorisation chronologique des valeurs de balayage, et
dans lequel l'étape de marquage (226) présente l'étape suivante consistant à :
arrêter la mémorisation (222), de sorte que la valeur de balayage mémorisée la plus actuelle représente un point de référence dans le temps à la base de temps (234), les valeurs de balayage mémorisées précédemment dans le temps étant distantes dans le temps de multiples correspondants de la durée de période du cycle d'horloge de la valeur de balayage la plus actuelle.

10. Procédé selon la revendication 9, dans lequel sont corrélées dans l'ordre chronologique opposé, à l'étape de la deuxième corrélation (228), partant de la valeur de balayage mémorisée la plus actuelle, les valeurs de balayage du signal de référence avec les valeurs de balayage mémorisées.

11. Procédé selon l'une des revendications précédentes, dans lequel est effectuée, avant l'étape de la deuxième corrélation (228), par ailleurs l'étape suivante consistant à :
générer le signal de référence à l'aide du mot d'information prédéterminé et de la partie de la version décodée du signal qui n'est pas en rapport avec le mot d'information.

12. Procédé selon l'une des revendications 3 à 10, dans lequel est effectuée, avant l'étape de la deuxième corrélation (228), par ailleurs l'étape suivante consistant à :
générer le signal de référence à l'aide de la succession de bits prédéterminée qui comporte le mot d'information prédéterminé, et des bits de données qui se situent à proximité du mot d'information prédéterminé dans le train binaire décodé.

13. Procédé selon la revendication 12, dans lequel est déterminée, dans l'étape de détermination (230) de la différence, le nombre de périodes du cycle d'horloge maître de la valeur de balayage mémorisée la plus actuelle à la période de cycle d'horloge dans laquelle se produit le maximum de corrélation, pour obtenir la valeur de correction.

14. Procédé selon l'une des revendications précédentes, dans lequel la base de temps présente une horloge destinée à mesurer le temps absolu, et dans lequel est marqué comme moment d'arrivée estimé, à l'étape de marquage (226), un moment absolu.

15. Procédé selon l'une des revendications 1 à 13, dans lequel la base de temps est en rapport avec la génération du signal codé, à l'étape de marquage (226) étant marqué comme moment d'arrivée estimé un moment relatif par rapport à la génération du signal codé.

16. Procédé pour déterminer le temps de propagation d'un signal codé d'un émetteur vers un récepteur selon le procédé de la revendication 1, aux étapes suivantes consistant à :
générer (18) un signal codé dans l'émetteur ;
transmettre (A1, A2) le signal codé au récepteur ;
déterminer (20) un moment d'émission estimé et une valeur de correction d'émission, par les étapes suivantes :
balayer (220) le signal codé et la mémoire (222) des valeurs de balayage en association avec une base de temps d'émission ;
décoder (124) le signal codé, pour obtenir une version décodée du signal présentant le mot d'information prédéterminé;
effectuer une première corrélation (224) de la version décodée du signal avec le mot d'information prédéterminé ;
en cas de présence du mot d'information prédéterminé dans la version décodée du signal, marquer (226) le moment de l'arrivée par rapport à la base de temps d'émission, pour obtenir un moment d'émission estimé ;
effectuer une deuxième corrélation (228) des valeurs de balayage mémorisées du signal codé avec un signal de référence présentant le mot d'information prédéterminé codé ; et
en cas de présence d'un maximum de corrélation à l'étape de la deuxième corrélation (228), déterminer (230) la différence entre le moment marqué et le moment de l'arrivée du maximum de corrélation, pour obtenir une valeur de correction d'émission;
déterminer (22) un moment de réception estimé et une valeur de correction de réception, par les étapes suivantes consistant à :
balayer (220) le signal codé et mémoriser (222) les valeurs de balayage en association avec une base de temps de réception ;
décoder (124) le signal codé, pour obtenir une version décodée du signal présentant le mot d'information prédéterminé ;
effectuer une deuxième corrélation (224) de la version décodée du signal avec le mot d'information prédéterminé ;
en cas de présence du mot d'information prédéterminé dans la version décodée du signal, marquer (226) le moment de l'arrivée par rapport à la base de temps de réception, pour obtenir un moment de réception estimé ;
effectuer une deuxième corrélation (228) des valeurs de balayage mémorisées du signal codé avec un signal de référence présentant le mot d'information prédéterminé codé ; et
en cas de présence d'un maximum de corrélation à l'étape de la deuxième corrélation (228), déterminer (230) la différence entre le moment marqué et le moment de l'arrivée du maximum de corrélation, pour obtenir une valeur de correction de réception;
déterminer (42, 46) le temps de propagation du signal de l'émetteur vers le récepteur en combinant le moment d'émission estimé et la valeur de correction d'émission, et le moment de réception estimé et la valeur de correction de réception.

17. Procédé selon la revendication 16, dans lequel le signal entre l'émetteur et le récepteur est transmis à une station de réception/émission, qui peut être un satellite (10), le temps de propagation déterminé étant utilisé pour déterminer la distance entre le satellite et le récepteur.

18. Procédé selon la revendication 16 ou 17, dans lequel la base de temps d'émission et la base de temps de réception présentent un cycle d'horloge maître (234) synchronisé l'un avec l'autre, le temps de propagation étant déterminé à partir du nombre de périodes entre le moment d'émission et le moment de réception.

19. Procédé selon la revendication 16 ou 17, dans lequel tant la base de temps d'émission que la base de temps de réception sont des horloges destinées à mesurer le temps absolu, le temps de propagation étant déterminé pour soustraire le moment de réception absolu du moment d'émission absolu.

20. Procédé selon l'une des revendications 16 à 19, dans lequel le signal codé est un signal DVB codé selon une norme MPEG, le codage comportant un codage à repliement, un codage à répartition d'énergie ou un codage à emboîtement.

21. Dispositif pour déterminer le moment d'arrivée d'un signal codé contenant un mot d'information prédéterminé,
un moment d'arrivée estimé du signal étant déterminé par un premier corrélateur (224) qui corrèle le signal décodé avec le mot d'information prédéterminé,
et une valeur de correction du moment d'arrivée étant déterminée par un deuxième corrélateur (228) qui corrèle le signal codé avec le mot d'information prédéterminé codé.

22. Dispositif selon la revendication 21, aux caractéristiques suivantes :
un dispositif (220) destiné à balayer le signal codé et une mémoire (222) des valeurs de balayage en association avec la base de temps ;
un dispositif (124) destiné à décoder le signal codé, pour obtenir une version décodée du signal présentant le mot d'information prédéterminé ;
le premier corrélateur (224) destiné à comparer la version décodée du signal avec le mot d'information prédéterminé ;
un dispositif destiné à marquer (226) le moment de l'arrivée par rapport à la base de temps, pour obtenir un moment d'arrivée estimé, en cas de présence du mot d'information prédéterminé dans la version décodée du signal ;
le deuxième corrélateur (228) destiné à corréler les valeurs de balayage mémorisées du signal codé avec une signal de référence présentant le mot d'information prédéterminé codé;
un dispositif destiné à déterminer (230) la différence entre le moment marqué et le moment d'arrivée du maximum de corrélation, pour obtenir une valeur de correction, en cas de présence d'un maximum de corrélation dans le deuxième corrélateur (228) ; et
un dispositif (230) destiné à combiner le moment d'arrivée estimé et la valeur de correction, pour obtenir le moment d'arrivée.

23. Dispositif pour déterminer le temps de propagation d'un signal codé d'un émetteur vers un récepteur avec le dispositif de la revendication 21, aux caractéristiques suivantes :
un dispositif destiné à générer (18) un signal codé dans l'émetteur;
un dispositif destiné à transmettre (A1, A2) le signal codé au récepteur ;
un dispositif (20) destiné à déterminer un moment d'émission estimé et une valeur de correction d'émission, présentant les caractéristiques suivantes :
un dispositif destiné à balayer (220) le signal codé et la mémoire (222) des valeurs de balayage en association avec une base de temps d'émission ;
un dispositif destiné à décoder (124) le signal codé, pour obtenir une version décodée du signal présentant le mot d'information prédéterminé ;
le premier corrélateur (224) destiné à comparer la version décodée du signal avec le mot d'information prédéterminé ;
un dispositif destiné à marquer (226) le moment de l'arrivée par rapport à la base de temps d'émission, pour obtenir un moment d'émission estimé, en cas de présence du mot d'information prédéterminé dans la version décodée du signal ;
le deuxième corrélateur (228) destiné à corréler les valeurs de balayage mémorisées du signal codé avec un signal de référence présentant le mot d'information prédéterminé codé ; et
un dispositif destiné à déterminer (230) la différence entre le moment marqué et le moment de l'arrivée du maximum de corrélation, pour obtenir une valeur de correction d'émission, en cas de présence d'un maximum de corrélation à l'étape de corrélation ;
un dispositif destiné à déterminer (22) un moment de réception estimé et une valeur de correction de réception, présentant les caractéristiques suivantes :
un dispositif destiné à balayer (220) le signal codé et mémoriser (222) les valeurs de balayage en association avec une base de temps de réception ;
un dispositif destiné à décoder (124) le signal codé, pour obtenir une version décodée du signal présentant le mot d'information prédéterminé ;
le premier corrélateur (224) destiné à comparer la version décodée du signal avec le mot d'information prédéterminé ;
un dispositif destiné à marquer (226) le moment de l'arrivée par rapport à la base de temps de réception, pour obtenir un moment de réception estimé, en cas de présence du mot d'information codé/décodé dans la version décodée du signal ;
le deuxième corrélateur (228) destiné à corréler les valeurs de balayage mémorisées du signal codé avec un signal de référence présentant le mot d'information prédéterminé codé ; et
un dispositif destiné à déterminer (230) la différence entre le moment marqué et le moment de l'arrivée du maximum de corrélation, pour obtenir une valeur de correction de réception, en cas de présence d'un maximum de corrélation à l'étape de corrélation;
un dispositif destiné (42, 46) à déterminer le temps de propagation du signal de l'émetteur vers le récepteur en combinant le moment d'émission estimé et la valeur de correction d'émission, et le moment de réception estimé et la valeur de correction de réception.

24. Dispositif selon la revendication 23, dans lequel le dispositif destiné à déterminer le temps de propagation du signal de l'émetteur au récepteur est disposé de manière à, lors de la combinaison
- calculer la différence entre le moment de réception estimé, pour obtenir un temps de propagation estimé, et
- soustraire du temps de propagation estimé la différence entre la valeur de correction d'émission et la valeur de correction de réception, pour obtenir le temps de propagation du signal.

25. Dispositif selon la revendication 23, dans lequel le dispositif destiné à déterminer le temps de propagation du signal de l'émetteur au récepteur est disposé de manière à, lors de la combinaison
- calculer la différence entre le moment d'émission estimé et la valeur de correction d'émission, pour obtenir le moment d'émission exact,
- calculer la différence entre le moment de réception estimé et la valeur de correction de réception, pour obtenir le moment de réception exact, et
- calculer la différence entre le moment de réception exact et le moment d'émission exact, pour obtenir le temps de propagation du signal.
